# EUROPÄISCHE PATENTSCHRIFT

(11) **EP 1 956 284 B1**
(45) Veröffentlichungstag und Bekanntmachung des Hinweises auf die Patenterteilung: **19.12.2012**
(21) Anmeldenummer: 08000326.2
(22) Anmeldetag: 10.01.2008
(51) Int. Cl.: F16P 3/14, F16P 3/08

(54) **Verfahren und Vorrichtung zur Sicherung mindestens einer sich in einem Gefahrenbereich befindenden Person**
Method and device for the protection of at least one person present in a dangerous area
Procédé et dispositif destinés à la sécurisation d'au moins une personne se trouvant dans une zone de danger

(30) Priorität: 12.02.2007 DE 102007007419; 20.02.2007 DE 102007008701
(43) Veröffentlichungstag der Anmeldung: 13.08.2008
(73) Patentinhaber: ThyssenKrupp System Engineering GmbH, 74076 Heilbronn (DE)
(72) Erfinder: Hinkelmann, Lutz, 26931 Elsfleth (DE)
(74) Vertreter: Möller, Friedrich

(56) Entgegenhaltungen:
- EP-A- 0 577 360
- WO-A-2007/010795
- GB-A- 2 407 126
- US-B1- 6 856 862

## Beschreibung

Die Erfindung betrifft ein Verfahren zur Sicherung mindestens einer sich in einem Gefahrenbereich befindenden Person gemäß dem Oberbegriff des Anspruchs 1. Des Weiteren betrifft die Erfindung eine Vorrichtung zur Lösung mindestens einer sich in einem Gefahrenbereich befindenden Person gemäß dem Oberbegriff des Anspruchs 9.

In Industriebetrieben - und in manchen Fällen auch in Handwerksbetrieben - gibt es viele Gefahrenbereiche, die durch Schutzeinrichtungen wie insbesondere eine Abtrennung gegen den Zugang von Personen gesichert sind. Das gilt ganz besonders für Bearbeitungszentren, Montageanlagen, Roboter, Transferstraßen oder dergleichen. Auch in der chemischen Industrie, bei Energiegewinnungsanlagen und Fördereinrichtungen sind Gefahrenbereiche durch Abtrennungen oder sonstige Schutzeinrichtungen abgetrennt. Aus dem Stand der Technik sind verschiedene Sicherheitsvorrichtungen bekannt, z.B. WO 2007/010795 A1 oder GB 2407126 A

Die abgetrennten Gefahrenbereiche müssen gelegentlich von Personen betreten werden, die Wartungs- bzw. Reparaturarbeiten an den durch die Abtrennung gesicherten Einrichtungen durchzuführen haben. Damit dabei die Personen nicht von insbesondere laufenden Einrichtungen gefährdet werden, müssen die Einrichtungen stillgesetzt werden, bevor auch nur eine Person den Gefahrenbereich betritt.

Es ist bereits bekannt, vor dem geplanten Betreten eines Gefahrenbereichs darin befindliche Einrichtungen durch einen von einem Schließmittel zu betätigenden Schalter außer Betrieb zu setzen, bevor die Person Zugang zum Gefahrenbereich erhält. Zur Verhinderung eines unbeabsichtigten Einschaltens durch außenstehende Personen nimmt die Person das Schließmittel mit in den abgetrennten Bereich. Es kommt jedoch vor, dass das Schließmittel außerhalb der Abtrennung steckengelassen wird. Es kann eine andere Person die Einrichtung einschalten und dadurch die sich innerhalb der Abtrennung befindliche Person gefährden. Das gilt vor allem bei ausgedehnten oder unübersichtlichen Einrichtungen, wo von außen die sich im Gefahrenbereich befindliche Person nicht immer erkennbar ist und somit in der Absperrung eingeschlossen wird. Die so eingeschlossene Person ist dann in ganz besonderem Maße gefährdet.

Ausgehend vom Vorstehenden liegt der Erfindung die Aufgabe zugrunde, ein Verfahren und eine Vorrichtung zur Sicherung mindestens einer sich in einem Gefahrenbereich befindlichen Person zu schaffen, womit auch bei größeren, unübersichtlichen Einrichtungen sichergestellt ist, dass sich die Einrichtung nur dann in Betrieb nehmen lässt, wenn sich keine Person mehr im Gefahrenbereich befindet.

Ein Verfahren zur Lösung dieser Aufgabe weist die Maßnahmen des Anspruchs 1 auf. Dadurch, dass von der sich in die Abtrennung begebenden Person mit dem Schließmittel wenigstens ein zusätzlicher Schließvorgang durchgeführt werden muss, kann das Schließmittel nicht im Schalter außerhalb der Abtrennung stecken bleiben. Es befindet sich also das Schließmittel immer innerhalb der Abtrennung. Dadurch ist es Dritten nicht mehr möglich, von außen mit dem Schließmittel die Einrichtung wieder in Betrieb zu setzen, solange sich noch eine Person innerhalb der Abtrennung befindet. Eine andere Person muss sich erst in die Abtrennung begeben, um das Schließmittel aus dieser herauszuziehen. Dadurch würde diese Person eine sich innerhalb der Abtrennung befindliche Person bemerken. Bei größeren unübersichtlichen Einrichtungen ist der Schalter im Inneren der Abtrennung zweckmäßigerweise an solcher Stelle angeordnet, die einen Einblick in sämtliche Bereiche der Einrichtung gewährleistet oder es sind mehrere Schalter an unterschiedlichen Stellen vorgesehen. In jedem Fall kann zuverlässig jede sich noch in der Abtrennung befindliche Person erblickt werden. Ein unbemerktes Einschließen einer solchen Person ist dadurch ausgeschlossen.

Gemäß der vorliegenden Erfindung ist vorgesehen, dass der zusätzliche Schließvorgang in der Abtrennung innerhalb einer bestimmten Zeitspanne nach dem ersten Schließvorgang außerhalb der Abtrennung erfolgt. Dadurch ist sichergestellt, dass die die Abtrennung betretende Person das Schließmittel mitnimmt und nicht außerhalb der Absperrung vergisst. Die die Absperrung betretende Person wird auf das vergessene Schließmittel durch ein akustisches und/oder optisches Signal sofort aufmerksam gemacht, weil ohne das mitgenommene Schließmittel innerhalb der vorgegebenen Zeitspanne der Schließvorgang im Inneren der Absperrung nicht erfolgen kann. Zweckmäßigerweise erlischt das Signal erst dann, wenn die Person das Schließmittel geholt und das innerhalb der Absperrung quittiert hat. Dieses Quittieren kann erfolgen durch Betätigen eines Quittierungsmittels und vorzugsweise ein Wiederholen des Schließvorgangs innerhalb des Gefahrenbereichs oder Überprüfung der Schaltverstellung des zur Durchführung des Schließvorgangs innerhalb des Gefahrenbereichs dienenden Schalters, womit feststellbar ist, ob der Schließvorgang im Gefahrenbereich durchgeführt wurde.

Nach einer Weiterbildung des Verfahrens ist vorgesehen, den oder jeden zusätzlichen Schließ- und/oder Quittierungsvorgang an mindestens einer solchen Stelle im Gefahrenbereich, insbesondere innerhalb der Abtrennung, durchzuführen, an der der gesamte Gefahrenbereich eingesehen werden kann. Das ist besonders bei größeren und unübersichtlichen Einrichtungen zweckmäßig. Eine dritte Person, die die Einrichtung wieder in Betrieb nehmen will, muss dann den Gefahrenbereich betreten, um das Schließmittel dort abzuholen. Hierbei kann (und muss) die dritte Person den gesamten Gefahrenbereich einsehen und feststellen, ob sich noch eine Person im Gefahrenbereich befindet.

Zur Wiederinbetriebnahme der Einrichtung muss zuerst der Schließvorgang im Gefahrenbereich durchgeführt werden. Erst danach kann durch einen Schließvorgang außerhalb des Gefahrenbereichs, also von der Außenseite der Abtrennung, die Einrichtung wieder in Betrieb genommen werden. Es ist so nicht möglich, von außen die Einrichtung einzuschalten, wenn sich noch eine Person im Gefahrenbereich befindet.

Die Wiederinbetriebnahme der Einrichtung erfordert es, dass innerhalb eines bestimmten Zeitraums nach dem Schließvorgang im Gefahrenbereich auch der Schließvorgang außerhalb des Gefahrenbereichs durchgeführt wird. Dadurch wird zuverlässig verhindert, dass der zweite Schließvorgang außerhalb des Gefahrenbereichs viel später als der Schließvorgang innerhalb des Gefahrenbereichs erfolgt, so dass in der Zwischenzeit eine Person sich wieder in die Abtrennung begeben könnte.

Gemäß einer bevorzugten Ausgestaltung des Verfahrens sind alle Schließvorgänge innerhalb und außerhalb der Abtrennung mit dem gleichen Schließmittel durchzuführen. Wenn im abgetrennten Gefahrenbereich mehrere Schalter oder dergleichen installiert sind, ist ein zusätzlicher Schalter mit gleichem Schließmittel außerhalb des abgetrennten Bereichs vorzusehen. Dieser zusätzliche Schalter oder dergleichen außerhalb des abgetrennten Bereichs ist im Bedienpult integriert oder in der Nähe desselben vorgesehen. Vorzugsweise ist jeder Schalter in der Abtrennung und der dazugehörende Schalter außerhalb der Abtrennung mit einem eigenen Schließmittel zu betätigen. Es wird so sichergestellt, dass keine dritte Person mit einem zweiten Schließmittel die Einrichtung einschaltet, wenn die Person mit dem ersten Schließmittel sich noch innerhalb des Gefahrenbereichs befindet.

Weiterhin ist es vorgesehen, dass die Einrichtung durch einen Schließvorgang außerhalb des Gefahrenbereichs nicht in Betrieb genommen werden kann, solange sich das Schließmittel noch im Gefahrenbereich, insbesondere in einem für den dort durchzuführenden Schließvorgang vorgesehenen Schalter, befindet. Auch hierdurch wird wirksam verhindert, dass mit einem zweiten Schließmittel die Einrichtung in Betrieb gesetzt wird, wenn sich noch eine Person innerhalb des abgetrennten Gefahrenbereichs befindet.

Nach einer bevorzugten Weiterbildung des Verfahrens ist vorgesehen, dass das nach Überschreiten einer voreingestellten Zeitspanne ertönende optische oder akustische Warnsignal nur abgestellt werden kann durch eine Quittierung von einer Person. Diese Quittierung ist innerhalb des abgetrennten Bereichs in unmittelbarer Nähe des mindestens einen dort angeordneten Schalters oder dergleichen auszuführen. Somit wird bei einem zu lange währenden Eintritt in den abgetrennten Bereich oder eine überlange Zeit nach Verlassen des abgetrennten Bereichs ein erneutes Aufsuchen des Gefahrenbereichs erzwungen, und zwar einem solchen Ort, von welchem aus die Person den gesamten Gefahrenbereich einsehen kann. Das Quittieren erfolgt entweder durch ein zusätzliches Mittel, beispielsweise einen Taster, oder durch eine Veränderung des Schließvorgangs des Schalters innerhalb der Abtrennung, also im Gefahrenbereich. Dazu muss der Schalter im Gefahrenbereich betätigt werden durch Einschalten und erneutes Abschalten oder umgekehrt. Dieses erneute Betätigen stellt-ebenfalls eine Quittierung dar.

Eine Vorrichtung zur Lösung der eingangs genannten Aufgabe weist die Merkmale des Anspruchs 9 auf. Demnach verfügt die Vorrichtung über mindestens einen weiteren vom Schließmittel betätigbaren Schalter innerhalb der Abtrennung, also im Gefahrenbereich. Dieser mindestens eine Schalter innerhalb des Gefahrenbereichs muss zusätzlich betätigt werden, wodurch die den Gefahrenbereich betretende Person den Schlüssel im Schalter außerhalb der Abtrennung nicht vergessen kann, womit eine andere Person ohne die Abtrennung betreten zu müssen, die Einrichtung wieder in Betrieb setzen und damit die sich innerhalb der Abtrennung befindliche Person gefährden könnte.

Eine Weiterbildung der Vorrichtung zeichnet sich durch ein Zeitglied aus, das beim Betätigen des Schalters außerhalb der Abtrennung aktivierbar ist und bei Betätigung des Schalters innerhalb der Abtrennung deaktiviert wird. Durch das Zeitglied wird eine bestimmte, einstellbare Zeitspanne vorgegeben, innerhalb derer die Person beide Schalter betätigen muss. Es ist so ausgeschlossen, dass der Schlüssel im außerhalb der Abtrennung sich befindenden Schalter vergessen wird und die Person in der Abtrennung dieses nicht sofort bemerkt und mit dem Schlüssel von einer dritten Person außerhalb des Gefahrenbereichs die Einrichtung unbefugt wieder eingeschaltet werden könnte. Umgekehrt wird das Zeitglied beim Verlassen des Gefahrenbereichs nach dem Entfernen des Schlüssels aus dem Schalter innerhalb der Abtrennung aktiviert und erst bei Betätigen des Schalters außerhalb der Abtrennung beim Schließen jeder Tür der Abtrennung deaktiviert.

Alternativ ist die Aktivierung des Zeitglieds möglich durch eine Kombination aus Abziehen des Schlüssels aus dem Schalter außerhalb der Abtrennung und dem Öffnen der jeweiligen Tür, wenn nach dem Abziehen des Schlüssels aus dem Schalter außerhalb der Abtrennung die jeweilige Tür der Abtrennung geöffnet worden ist. Genauso kann die Deaktivierung des innerhalb der Abtrennung gestarteten Zeitglieds durch eine Kombination des Schließens der jeweiligen Tür und das Betätigen des Schalters außerhalb der Abtrennung erfolgen.

Gemäß der Erfindung ist des Weiteren mindestens eine Signaleinrichtung vorgesehen, die ein optisches und/oder akustisches Signal erzeugt, wenn nach dem Betätigen des Schalters außerhalb der Abtrennung nicht innerhalb eines bestimmten Zeitraums, der Schalter innerhalb der Abtrennung betätigt worden ist. Die Person innerhalb der Abtrennung wird demzufolge innerhalb kürzester Zeit darauf aufmerksam gemacht, dass sie den zweiten Schalter innerhalb der Abtrennung nicht betätigt hat, weil der Schlüssel im Schalter außerhalb der Abtrennung vergessen worden ist. Die Person kann sofort nach dem Betreten der Abtrennung den Schlüssel holen, bevor eine andere Person unbefugterweise die Einrichtung einschaltet und dadurch eine sich noch in der Abtrennung befindende Person gefährden würde. Gleiches gilt analog, in umgekehrter Reihenfolge, wenn eine Person den Gefahrenbereich verlassen will.

Gemäß einer Weiterbildung der Vorrichtung ist vorgesehen, dass das Abstellen eines ausgelösten optischen oder akustischen Warnsignals nur durch das Einstecken des Schlüssels in den jeweiligen Schalter im Inneren der Abtrennung und Betätigen eines Quittierungsmittels, beispielsweise eines Quittierungstasters, möglich ist. Es ist so sichergestellt, dass eine Person erst wieder den Gefahrenbereich betreten und sich dort vergewissern muss, dass sich in diesem keine Person mehr befindet, bevor das Warnsignal ausgeschaltet werden kann. Alternativ ist dieses auch zu erreichen, indem durch eine geeignete Steuerung überwacht wird, ob beim sich innerhalb der Abtrennung befindlichen Schalter ein Schaltervorgang erfolgt ist. Auch hierdurch ist eine Person, die das Warnsignal löschen möchte, gezwungen, den Gefahrenbereich auf eine sich dort eventuell noch befindliche Person zu überprüfen.

Die Abtrennung des Gefahrenbereichs kann zaun- und/oder wandartig ausgebildet sein. Die wandartige Abtrennung kann auch gleichzeitig zum Schallschutz dienen. Die zaun- und/oder wandartige Abtrennung verfügt über mindestens einen Zugang zum Gefahrenbereich, der als eine Tür oder ein Tor mit einer vorzugsweise detektierbaren Verriegelung oder einer alternativen Zugangsabsicherung ausgebildet ist. Ein Öffnen der Tür ohne Betätigung des außerhalb der Abtrennung sich befindlichen Schalters unterbricht automatisch alle Versorgungsspannungen und stoppt somit sofort sämtliche Bewegungen der Einrichtungen innerhalb der Abtrennung (Notstopp). Ein Wiederanlauf der Einrichtungen ist erst nach einem erneuten Kontrollgang im Gefahrenbereich möglich, wobei zunächst der Schlüssel aus dem Schalter außerhalb der Abtrennung in den Schalter im Inneren der Abtrennung gesteckt werden muss. Anschließend wird der Schlüssel aus dem Schalter innerhalb der Abtrennung entfernt, was die Aktivierung des Zeitglieds zur Folge hat und der Schlüssel erneut innerhalb der vom Zeitglied vorgegebenen Zeitspanne in den Schalter außerhalb des abgetrennten Bereichs gesteckt, um das Zeitglied nach dem Schließen der Tür zu deaktivieren.

Die Erfindung ist aber nicht auf körperliche Abtrennung, die zaun- und/oder wandartig ausgebildet sind, beschränkt. Die Abtrennung kann auch optisch bzw. sensorisch erfolgen, beispielsweise durch Lichtschranken oder dergleichen. Eine solche "imaginäre" Abtrennung kann an jeder beliebigen Stelle begehbar sein, nachdem der Zugang durch Betätigen des Schalters außerhalb der Abtrennung freigegeben worden ist.

Gemäß einer bevorzugten Ausgestaltung der Vorrichtung ist vorgesehen, den jeweiligen Schalter als Schlüsselschalter auszubilden. Beim Schließmittel handelt es sich dabei um einen entsprechenden Schlüssel, wobei alternativ als Schließmittel aber auch eine Codekarte oder ein Ausweis dienen kann. Des Weiteren sind die Schlüsselschalter innerhalb und außerhalb der Abtrennung so ausgebildet, dass sie mit dem gleichen Schlüssel, der gleichen Codekarte oder einem gleichen Ausweis betätigbar sind. Sofern mehrere Personen Schlüssel oder sonstige Schließmittel für die Schlüsselschalter besitzen, oder mehrere Schließmittel im Umlauf sind, sind diese bevorzugt kodiert, damit sichergestellt ist, dass beim Betätigen des außerhalb der Abtrennung sich befindenden Schalters der Schalter innerhalb der Abtrennung mit dem gleich kodierten Schlüssel, also dem auch im körperlichen Sinne gleichen Schlüssel, betätigt wird. Dadurch wird sichergestellt, dass eine dritte Person, die unbefugt mit einem weiteren Schlüssel von der Außenseite der Abtrennung in Betrieb nehmen möchte, sich erst in die Abtrennung begeben muss, um den dort steckenden (ersten) Schlüssel der sich im Gefahrenbereich befindlichen Person holen zu müssen und dabei zwangsläufig zu prüfen, ob sich noch eine Person innerhalb der Abtrennung und somit im Gefahrenbereich befindet.

Die Erfindung eignet sich auch für mehrere aufeinanderfolgende Einrichtungen, die jeweils für sich getrennt und verkettet sind, beispielsweise durch Fördereinrichtungen zwischen der einen Einrichtung und der darauffolgenden Einrichtung. In einem solchen Fall kann es notwendig sein, beim Stillsetzen einer Einrichtung auch mindestens eine andere Einrichtung, insbesondere eine in Fertigungs- oder Förderrichtung vorangehende Einrichtung, gleichzeitig stillzusetzen. Erfindungsgemäß ist vorgesehen, dass dies automatisch durch eine Schaltung geschieht, ohne dass irgendein Schalter außerhalb und innerhalb der Abtrennung der jeweiligen gleichzeitig stillzusetzenden Einrichtung betätigt wird. Wenn demnach eine Person sich durch Stillsetzen einer Einrichtung Zugang zur Abtrennung dieser Einrichtung verschafft, indem der sich außerhalb der Abtrennung befindende Schalter und der Schalter innerhalb der Einrichtung betätigt werden, erfolgt automatisch ein Stillsetzen aller Einrichtungen, die die Person in der von ihr unmittelbar stillzusetzenden Einrichtung gefährden könnten.

Denkbar ist es auch, nicht nur einen Schalter, sondern mehrere Schalter innerhalb der jeweiligen Abtrennung anzuordnen. Dazu entstehen mehrere Kontrollpunkte in der Abtrennung, die bei großen Anlagen, beispielsweise Transferstraßen oder Produktionsstraßen mit mehreren verketteten Einrichtungen oder Ebenen, erforderlich sind, um eine außenstehende Person, die die Einrichtung in Betrieb nehmen möchte, zu zwingen, erst an allen Kontrollpunkten die Schalter durch Schließvorgänge zu betätigen und sich dabei zu vergewissern, dass sich in keinem Gefahrenbereich mehr eine Person befindet. Es ist auch möglich, die gesamte Kontrolle einer ausgedehnten Anlage durch nur einen inneren Schließpunkt zu erreichen, indem dieser einzige Schließpunkt so platziert wird, dass zum Erreichen des einzigen Schalters dieses Schließpunkts alle Gefahrenbereiche der ausgedehnten Anlage kontrolliert werden müssen.

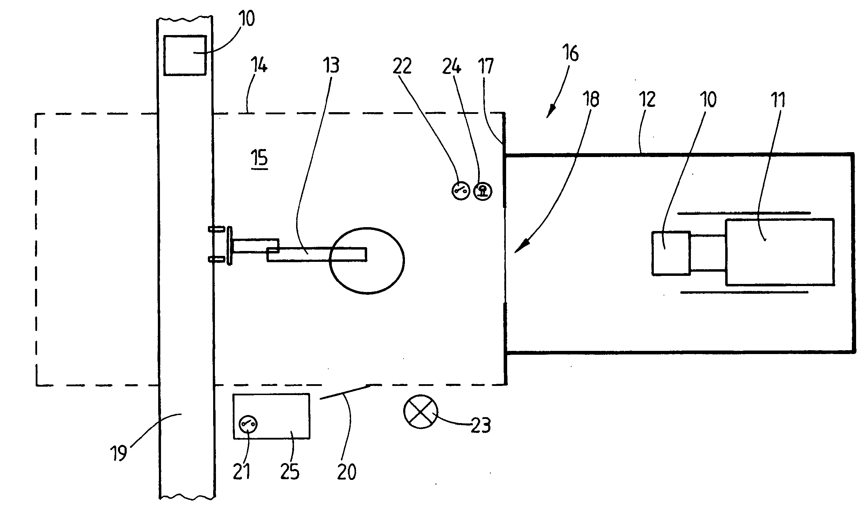

Ein bevorzugtes Ausführungsbeispiel der Erfindung wird nachfolgend anhand der Zeichnung näher erläutert. Die einzige Figur der Zeichnung zeigt eine schematische Draufsicht auf eine mit einer Abtrennung versehene Einrichtung.

Beim in der Zeichnung dargestellten Ausführungsbeispiel handelt es sich um eine Einrichtung im Bereich der Montage von Verbrennungsmotoren 10. In der Figur ist ein solcher Verbrennungsmotor 10 andeutungsweise dargestellt. Der Verbrennungsmotor 10 wird auf einem nur schematisch dargestellten Prüfstand 11 innerhalb einer von außen nur partiell einsehbaren Schallschutzkabine 12 geprüft. Des Weiteren verfügt die gezeigte Einrichtung über einen Roboter 13, der innerhalb eines von einem Trenngitter 14 umgebenen, abgeschlossenen Raums 15 angeordnet ist. Die Schallschutzkabine 12 und der vom Trenngitter 14 abgetrennte Raum 15 hängen zusammen und bilden so insgesamt eine Abtrennung 16. An der zum Raum 15 weisenden Stirnseite 17 ist die Schallschutzkabine 12 mit einer großflächigen Öffnung 18 versehen, die gegebenenfalls verschließbar sein kann, beispielsweise durch ein nicht gezeigtes Rolltor. Durch die Öffnung 18 der Schallschutzkabine 12 hindurch kann der Roboter 13 in den Prüfstand 11 gelangen, um in diesen einen zu prüfenden Verbrennungsmotor 10 einzusetzen und den Verbrennungsmotor nach der Prüfung wieder aus der Schallschutzkabine 12 zu entnehmen. Gegebenenfalls kann der Roboter 13 am Verbrennungsmotor 10 vorzugsweise vor und/oder nach der Prüfung noch Montagevorgänge vornehmen. Der Roboter 13 dient auch dazu, am Verbrennungsmotor 10 zur Prüfung erforderliche Anschlüsse anzubringen, den Verbrennungsmotor 10 auf dem Prüfstand 11 zu fixieren und nach erfolgter Prüfung zu lösen. Ein schematisch angeordneter Förderer, beispielsweise eine Rollenbahn 19, erstreckt sich quer durch den Raum 15, in dem der Roboter 13 angeordnet ist. Dadurch werden Verbrennungsmotoren 10 zum Roboter 13 transportiert und ebenso abtransportiert. Sofern der Roboter 13 im Prüfstand 11 irgendwelche Teile am Verbrennungsmotor 10 montiert, werden auch diese von der Rollenbahn 19 dem Roboter 13 im Raum 15 zugeführt.

Der vom Trenngitter 14 abgegrenzte Raum 15 der Abtrennung 16 ist im gezeigten Ausführungsbeispiel durch eine einzige Tür 20 mit einer in der Figur nicht dargestellten Verriegelung verschließbar. Es können aber auch mehrere Türen oder dergleichen mit Verriegelungen vorgesehen sein. Ein Öffnen dieser Verriegelung würde zu einer sofortigen Abschaltung mindestens des Prüfstands 11 und gegebenenfalls auch des Roboters 13 und/oder der Rollbahn 19 führen (Notabschaltung). Es ist zur geplanten Begehung des Gefahrenbereichs außerhalb der Abtrennung 16 ein Schalter 21 vorgesehen, der durch ein Schließmittel, beispielsweise einen Schlüssel oder auch eine Codekarte oder einen Ausweis, betätigbar ist. Der somit als Schließschalter ausgebildete Schalter 21 befindet sich bevorzugt in einem Bedienpult 25 oder in der Nähe desselben, von wo der Raum 15 möglichst gut einsehbar ist.

Ein weiterer Schalter 22 befindet sich innerhalb der Abtrennung 16, und zwar bevorzugt außen an der Schallschutzkabine 12 des Prüfstands 11. Im gezeigten Ausführungsbeispiel ist der Schalter 22 fest an der zum Raum 15 weisenden Seite der Stirnwandung 17 der Schallschutzkabine 12 angeordnet, und zwar neben der verschließbaren Öffnung 18. Der Schalter 22 ist so ausgebildet, dass er mit dem gleichen Schlüssel oder einem sonstigen Schließmittel betätigbar ist, womit auch der außerhalb des Trenngitters 14 angeordnete Schalter 21 schließbar ist. Neben dem Schalter 22 ist beim hier gezeigten Ausführungsbeispiel der Erfindung ein Quittierungstaster 24 angeordnet.

Die Schalter 21 und 22, der Quittierungstaster 24 und vorzugsweise auch die Verriegelung der Tür korrespondieren mit einer nicht gezeigten Schaltung, die die Einrichtung, und zwar zumindest den Roboter 13, aber gegebenenfalls auch die Rollenbahn 19 und/oder den Prüfstand 11, stillsetzt, wenn der Schalter 21 durch einen Schließvorgang außerhalb der Abtrennung 16 betätigt worden ist und/oder ausschließlich nach dem Betätigen der Verriegelung der Tür 20 der vom Trenngitter 14 umgebende Raum 15 geöffnet wird.

Die Schaltung verfügt des Weiteren über einen Timer bzw. ein Zeitglied, vorzugsweise ein Zeitrelais, mit einer einstellbaren Zeit, in der das Zeitrelais einen Schaltvorgang auslöst. Bevorzugt wird im Zeitrelais eine Zeitspanne von 10 bis 20 Sekunden eingestellt. Wird nicht innerhalb der vom Zeitrelais eingestellten Zeit der Schalter 22 innerhalb der Abtrennung 16 betätigt, löst das Zeitrelais nach Ablauf der eingestellten Zeit ein Signal aus. Dazu ist vorzugsweise außerhalb der Abtrennung 16 im gezeigten Ausführungsbeispiel neben der Tür 20 des Trenngitters 14 eine Signaleinrichtung 23 vorgesehen. Hierbei kann es sich um eine Leuchte zur Erzeugung eines optischen Signals handeln, und zwar sowohl eine Dauerleuchte als auch eine Blinkleuchte, oder um eine Hupe bzw. ein Horn. Die Signaleinrichtung kann auch beides aufweisen. Es ist auch denkbar, alternativ oder zusätzlich ein Warnsignal an eine zentrale Überwachungsstelle im Betrieb zu übermitteln.

Nachfolgend wird das erfindungsgemäße Verfahren anhand der in der Figur gezeigten Vorrichtung näher erläutert:

Sind der Prüfstand 11 und/oder Roboter 13 in Betrieb, ist die Tür 20 im Trenngitter 14 der Abtrennung 16 geschlossen und verriegelt. Im Schalter 21 außerhalb des Trenngitters 14 befindet sich ein Schlüssel oder ein sonstiges Schließmittel.

Bevor sich nun eine Person in den Gefahrenbereich des Roboters 13 und/oder des Prüfstands 11 begibt, wird mindestens der Roboter 13 in der Abtrennung 16 ausgeschaltet, gegebenenfalls auch der Prüfstand 11 und/oder die Rollenbahn 19. Zu diesem Zweck entnimmt die Person durch Auslösen des Schließvorgangs den Schlüssel aus dem Schalter 21 außerhalb der Abtrennung 16 und öffnet die Verriegelung der Tür 20 zur Abtrennung 16. Der Roboter 13 und gegebenenfalls auch die Rollenbahn 19 und/oder der Prüfstand 11 werden stillgesetzt, sobald der Schalter 21 betätigt worden ist oder wenn die Person die von der Verriegelung freigegebene Tür 20 öffnet, um den Raum 15 zu betreten.

Mit dem Betätigen des Schalters 21, womit gegebenenfalls das Lösen der Verriegelung der Tür 20 kombiniert sein kann, wird gleichzeitig das Zeitrelais aktiviert und die Zeitschaltuhr desselben gestartet. Nun muss die Person innerhalb der im Zeitrelais eingestellten Zeitspanne (beispielsweise 10 bis 20 Sekunden) mit dem gleichen Schlüssel, mit dem zuerst der Schalter 21 betätigt worden ist, den Schalter 22 in der Abtrennung 16 betätigen. Geschieht dies, kann die Person ihre Tätigkeiten innerhalb der Abtrennung bei zumindest abgeschaltetem Roboter 13 und somit ohne die Gefahr einer Gefährdung vornehmen.

Wird der Schalter 22 innerhalb der Abtrennung 16 nicht innerhalb der am Zeitrelais eingestellten Zeitspanne betätigt, weil beispielsweise die Person ihren Schlüssel im Schalter 21 außerhalb der Abtrennung 16 steckengelassen hat, betätigt die Schaltung die Signaleinrichtung 23. Der Person innerhalb der Abtrennung 16 wird damit signalisiert, dass sie den Schlüssel im Schalter 21 außerhalb der Abtrennung 16 vergessen hat. Die Person zieht den Schlüssel dann vom Schalter 21 ab, betätigt damit den Schalter 22 im Raum 15 und drückt die Quittierungstaste 24. Letzteres kann entfallen, wenn der Schließvorgang am Schalter 22 überwacht wird. Der Schließvorgang des Schalters 22 hat dann gleichzeitig ein Quittieren zur Folge.

Will nun eine andere (dritte) Person die Einrichtung, insbesondere den Roboter 13 und/ oder die Rollenbahn 19 bzw. den Prüfstand 11 einschalten, wenn sich noch eine Person in der Abtrennung 16 befindet, muss diese dritte Person den Raum 15 betreten, um an den Schlüssel im Schalter 22 zu gelangen. Weil sich der Schalter 22 in der Abtrennung 16 befindet, kann - und muss - die dritte Person insbesondere in der von außen nicht einsehbaren geschlossenen Schallschutzkabine 12 nachsehen, ob sich dort eine Person am Verbrennungsmotor 10 bzw. im Prüfstand 11 befindet. Wird dabei eine Person in der Schallschutzkabine 12 entdeckt, wird die dritte Person die Einrichtung nicht einschalten, um die in der Schallschutzkabine 12 noch tätige Person zu gefährden. Stellt die dritte Person hingegen fest, dass sich keine Person innerhalb der Abtrennung 16, insbesondere der Schallschutzkabine 12, mehr befindet, kann sie die Einrichtung einschalten.

Das Einschalten der Einrichtung erfolgt so, dass zunächst der Schalter 22 in der Abtrennung 16 betätigt und der Schlüssel vom Schalter 22 abgezogen wird. Beim Betätigen des Schalters 22 wird wiederum das Zeitrelais der Schaltung betätigt, so dass innerhalb einer bestimmten Zeit von beispielsweise 10 bis 20 Sekunden die Person den Raum 16 verlassen, die Tür 20 schließen und den Schalter 21 außerhalb der Abtrennung 16 betätigen muss. Geschieht dies innerhalb der vom Zeitrelais vorgegebenen Zeitspanne, wird mit dem Betätigen des Schalters 21 außerhalb der Abtrennung 16 die Einrichtung, insbesondere der Roboter 13 und gegebenenfalls auch der Prüfstand 11 und/oder die Rollenbahn 19 wieder in Betrieb gesetzt. Wird hingegen der Schalter 21 außerhalb der Abtrennung 16 nicht innerhalb der vom Zeitrelais vorgegebenen Zeitspanne betätigt, beispielsweise weil die Person zwischenzeitlich noch andere Tätigkeiten ausübt und in dieser Zeit die Gefahr besteht, dass sich eine andere Person in die Abtrennung 16 begibt, wird von der Signaleinrichtung 23 wieder ein optisches und/oder akustisches Signal gegeben. Es ist nach Ablauf der vom Zeitrelais vorgegebenen Zeitspanne nicht möglich, durch Betätigen des Schalters 21 außerhalb der Abtrennung 16 die Einrichtung, insbesondere den Roboter 13, wieder in Betrieb zu setzen. Dann muss die Person zunächst wieder den Schalter 22 und - wenn vorhanden - den Quittierungstaster 24 innerhalb der Abtrennung 16 betätigen und sich dabei vergewissern, ob sich auch keine andere Person in der Schallschutzkabine 12 oder dem Raum 15 befindet, bevor dann wiederum innerhalb der vom Zeitrelais vorgegebenen Zeitspanne der Schalter 21 außerhalb der Abtrennung 16 betätigt werden kann und dabei die Einrichtung wieder in Betrieb gesetzt wird.

Die Erfindung eignet sich auch für beliebige andere Anlagen, insbesondere zur Montage und/oder Bearbeitung von Gegenständen. Diese können beliebige andere Einrichtungen aufweisen, als der in der Figur gezeigte Prüfstand 11, der Roboter 13 und die Rollenbahn 19.

Es ist auch möglich, bei größeren und unübersichtlicheren Anlagen mehrere Schalter innerhalb der Abtrennung 16 vorzusehen. In diesem Fall ist außerhalb des abgetrennten Bereichs und zweckmäßigerweise in unmittelbarer Nähe des Bedienpults 25 eine große Anzahl an Schaltern mit den gleichen innerhalb der Abtrennung 16 verwendeten Schlüsseln oder sonstigen Schließmitteln vorzusehen. Auch ist es bei verketteten, im Übrigen aber räumlich getrennten und separat abgegrenzten Anlagen möglich, mit dem Abschalten und Einschalten einer Anlage mindestens eine andere Anlage gleichzeitig abzuschalten und einzuschalten.

### Bezugszeichenliste:

- 10: Verbrennungsmotor
- 11: Prüfstand
- 12: Schallschutzkabine
- 13: Roboter
- 14: Trenngitter
- 15: Raum
- 16: Abtrennung
- 17: Stirnwandung
- 18: Öffnung
- 19: Rollenbahn
- 20: Tür
- 21: Schalter
- 22: Schalter
- 23: Signaleinrichtung
- 24: Quittierungstaster
- 25: Bedienpult

## Patentansprüche

1. Verfahren zur Sicherung mindestens einer sich in einem Gefahrenbereich (15) befindenden Person, wobei der Gefahrenbereich (15) nach einem Schließvorgang zum Außerbetriebsetzen jeder für die Person zu einer Gefährdung führenden Einrichtung (13) zugänglich wird und von der den Gefahrenbereich (15) betretenden Person ein zum Durchführen des Schließvorgangs benötigtes Schließmittel mit in den Gefahrenbereich (15) genommen wird, and wobei im Gefahrenbereich (15) von der Person mit dem Schließmittel wenigstens ein zusätzlicher Schließvorgang durchgeführt wird **dadurch gekennzeichnet, dass** der zusätzliche Schließvorgang innerhalb einer bestimmten Zeitspanne nach dem anfänglichen Schließvorgang durchgeführt werden muss, wodevich sichergestellt wird, dass die den gefawindereich (15) betrietende Person das Schlieβmittel mitnimmt.

2. Verfahren nach Anspruch 1, **dadurch gekennzeichnet, dass** der zusätzliche Schließvorgang an mindestens einer solchen Stelle im Gefahrenbereich (15) durchgeführt wird, von der aus der vorzugsweise gesamte Gefahrenbereich (15) eingesehen werden kann.

3. Verfahren nach Anspruch 1 oder 2, **dadurch gekennzeichnet, dass** zur Wiederinbetriebnahme der Einrichtung (13) zuerst der Schließvorgang im Gefahrenbereich (15) und danach der Schließvorgang außerhalb des Gefahrenbereichs (15) durchgeführd wird, wobei mit dem Schließvorgang außerhalb des Gefahrenbereichs (15) die Einrichtunt (13) wieder in Betrieb genommen werden kann.

4. Verfahren nach Anspruch 3, **dadurch gekennzeichnet, dass** innerhalb eines bestimmten Zeitraums nach dem Schließvorgang im Gefahrenbereich (15) der Schließvorgang außerhalb des Gefahrenbereichs (15) absolviert worden sein muss.

5. Verfahren nach einem der vorhergehenden Ansprüche, **dadurch gekennzeichnet, dass** alle Schließvorgänge mit dem gleichen Schließmittel vorgenommen werden.

6. Verfahren nach einem der vorhergehenden Ansprüche, **dadurch gekennzeichnet, dass** die Einrichtung (13) durch einen Schließvorgang außerhalb des Gefahrenbereichs (15) nicht in Betrieb genommen werden kann, solange sich das Schließmittel noch in einem Schalter (22) innerhalb des Gefahrenbereichs (15) befindet.

7. Verfahren nach einem der vorhergehenden Ansprüche, **dadurch gekennzeichnet, dass** ein Signal erzeugt wird, wenn die aufeinanderfolgenden Schließvorgänge nicht innerhalb der vorgesehenen Zeitspanne durchgeführt werden.

8. Verfahren nach Anspruch 7, **dadurch gekennzeichnet, dass** nach einem Signal ein Betätigungsmittel im Gefahrenbereich (15), vorzugsweise ein Quittierungstaster (24), betätigt werden muss, bevor die Einrichtung wieder in Betrieb genommen werden kann.

9. Vorrichtung zur Sicherung einer sich in einem Gefahrenbereich befindenden Person, mit einer mindestens einen Zugang aufweisenden Abtrennung (16) des Gefahrenbereichs und einen außerhalb der Abtrennung (16) angeordneten Schalter (21), der durch ein Schließmittel betätigbar ist, wobei innerhalb der Abtrennung (16) wenigstens ein weiterer, vom Schließmittel betätigbarer Schalter (22) angeordnet ist, **gekennzeichnet durch** eine Signaleinrichtung (23), die ein Signal erzeugt, wenn nach dem Betätigen des Schalters (21) außerhalb der Abtrennung (16) nicht innerhalb einer bestimmten Zeit der Schalter (22) innerhalb der Abtrennung (16) betätigt worden ist, wodurch nichergestellt wird, dass die den gefäwiendereich betretende Person das Schlieβmittel mitnimmt.

10. Vorrichtung nach Anspruch 9, **gekennzeichnet durch** ein Zeitglied, das beim Betätigen des Schalters (21) außerhalb der Abtrennung (16) aktivierbar und beim Betätigen des Schalters (22) innerhalb der Abtrennung (16) deaktivierbar ist, insbesondere wenn der mindestens eine Zugang zum abgetrennten Bereich verschlossen und/ oder verriegelt worden ist.

11. Vorrichtung nach Anspruch 10, **dadurch gekennzeichnet, dass** ein vom Zeitglied vorgegebenes Zeitintervall die Zeit bestimmt, in der der Schalter (22) innerhalb der Abtrennung betätigt sein muss.

12. Vorrichtung nach Anspruch 9, **dadurch gekennzeichnet, dass** mindestens ein Betätigungsmittel, vorzugsweise ein Quittierungstaster (24), vorgesehen ist zum Beenden des von der Signaleinrichtung (23) erzeugten Signals und zum Neustart des vom Zeitglied vorgegebenen Zeitintervalls.

13. Vorrichtung nach einem der vorhergehenden Ansprüche, **dadurch gekennzeichnet, dass** die Abtrennung (16) zaun- und/oder wandartig ausgebildet ist und mindestens eine den Zugang zum Gefahrenbereich ermöglichende, insbesondere verriegelbare, Tür (20) oder dergleichen aufweist, wobei im Bereich einer Tür (20) oder dergleichen der sich außerhalb der Abtrennung (16) befindende Schalter (21) angeordnet ist, vorzugsweise in oder an einem Bedienpult (25) außerhalb der Abtrennung (16).

14. Vorrichtung nach einem der vorhergehenden Ansprüche, **dadurch gekennzeichnet, dass** die Abtrennung (16) optisch bzw. sensorisch erfolgt, wobei der Zugang nach Betätigen des Schalters (21) außerhalb der Abtrennung (16) freigebbar ist.

15. Vorrichtung nach einem der vorhergehenden Ansprüche, **dadurch gekennzeichnet, dass** der jeweilige Schalter (21, 22) als Schlüsselschalter ausgebildet ist, das Schließmittel ein Schalter, eine Codekarte und/oder ein Ausweis ist und mit dem gleichen Schließmittel die Schalter (21, 22) außerhalb und innerhalb der Abtrennung (16) betätigbar sind.

## Claims

1. Method for protecting at least one person in a dangerous area (15), the dangerous area (15) becoming accessible after a closing operation for shutting down any device (13) which leads to a danger for the person, and the person entering the dangerous area (15) taking a closing means needed to carry out the closing operation into the dangerous area (15), and the person carrying out at least one additional closing operation in the dangerous area (15) using the closing means, **characterized in that** the additional closing operation must be carried out within a particular period of time after the initial closing operation, thus ensuring that the person entering the dangerous area (15) takes the closing means.

2. Method according to Claim 1, **characterized in that** the additional closing operation is carried out at at least one location in the dangerous area (15) from which the preferably entire dangerous area (15) can be seen.

3. Method according to Claim 1 or 2, **characterized in that**, in order to restart the device (13), the closing operation in the dangerous area (15) is first carried out and the closing operation outside the dangerous area (15) is then carried out, the device (13) being able to be restarted using the closing operation outside the dangerous area (15).

4. Method according to Claim 3, **characterized in that** the closing operation outside the dangerous area (15) must have been completed within a particular period after the closing operation in the dangerous area (15).

5. Method according to one of the preceding claims, **characterized in that** all closing operations are carried out using the same closing means.

6. Method according to one of the preceding claims, **characterized in that** the device (13) cannot be started by a closing operation outside the dangerous area (15) as long as the closing means is still in a switch (22) inside the dangerous area (15).

7. Method according to one of the preceding claims, **characterized in that** a signal is generated if the successive closing operations are not carried out within the intended period of time.

8. Method according to Claim 7, **characterized in that**, after a signal, an operating means in the dangerous area (15), preferably an acknowledgement button (24), must be operated before the device can be restarted.

9. Apparatus for protecting a person in a dangerous area, having a partition (16) of the dangerous area, which partition has at least one access, and a switch (21) which is arranged outside the partition (16) and can be operated by a closing means, at least one further switch (22) which can be operated by the closing means being arranged inside the partition (16), **characterized by** a signalling device (23) which generates a signal if the switch (22) inside the partition (16) has not been operated within a particular time after the switch (21) outside the partition (16) has been operated, thus ensuring that the person entering the dangerous area takes the closing means.

10. Apparatus according to Claim 9, **characterized by** a timer which can be activated upon operating the switch (21) outside the partition (16) and can be deactivated upon operating the switch (22) inside the partition (16), in particular if the at least one access to the area which has been partitioned off has been closed and/or locked.

11. Apparatus according to Claim 10, **characterized in that** an interval of time predefined by the timer determines the time in which the switch (22) inside the partition must be operated.

12. Apparatus according to Claim 9, **characterized in that** at least one operating means, preferably an acknowledgement button (24), is provided for the purpose of terminating the signal generated by the signalling device (23) and restarting the interval of time predefined by the timer.

13. Apparatus according to one of the preceding claims, **characterized in that** the partition (16) is in the form of a fence and/or a wall and has at least one door (20) or the like, in particular a lockable door or the like, which allows access to the dangerous area, the switch (21) outside the partition (16) being arranged in the region of a door (20) or the like, preferably in or on a control panel (25) outside the partition (16).

14. Apparatus according to one of the preceding claims, **characterized in that** the partition (16) is effected optically or using sensors, access being able to be enabled after the switch (21) outside the partition (16) has been operated.

15. Apparatus according to one of the preceding claims, **characterized in that** the respective switch (21, 22) is in the form of a key switch, the closing means is a switch, a code card and/or an ID, and the switches (21, 22) outside and inside the partition (16) can be operated using the same closing means.

## Revendications

1. Procédé de protection d'au moins une personne présente dans une zone à risque (15), 1a zone à risque (15) étant accessible après une opération de fermeture qui met hors service tout dispositif (13) qui pourrait mettre en danger la personne et un moyen de fermeture nécessaire pour exécuter l'opération de fermeture étant emporté dans la zone à risque (15) par la personne qui se déplace dans la zone à risque (15), au moins une opération supplémentaire de fermeture étant exécutée dans la zone à risque (15) par la personne qui porte le moyen de fermeture,
**caractérisé en ce que**
l'opération supplémentaire de fermeture doit être exécutée à l'intérieur d'un laps de temps défini après l'opération initiale de fermeture, ce qui garantit que la personne qui se déplace dans la zone à risque (15) emporte avec elle le moyen de fermeture.

2. Procédé selon la revendication 1, **caractérisé en ce que** l'opération supplémentaire de fermeture est exécutée en au moins un emplacement de la zone à risque (15) duquel de préférence la totalité de la zone à risque (15) est visible.

3. Procédé selon les revendications 1 ou 2, **caractérisé en ce que** pour remettre en service le dispositif (13), l'opération de fermeture dans la zone à risque (15) est d'abord exécutée, l'opération de fermeture à l'extérieur de la zone à risque (15) étant exécutée ensuite, le dispositif (13) pouvant être remis en service avec l'opération de fermeture exécutée à l'extérieur de la zone à risque (15).

4. Procédé selon la revendication 3, **caractérisé en ce que** l'opération de fermeture exécutée à l'extérieur de la zone à risque (15) doit être terminée à l'intérieur d'un laps de temps défini après l'opération de fermeture exécutée dans la zone à risque (15).

5. Procédé selon l'une des revendications précédentes, **caractérisé en ce que** toutes les opérations de fermeture sont exécutées avec le même moyen de fermeture.

6. Procédé selon l'une des revendications précédentes, **caractérisé en ce que** le dispositif (13) ne peut être mis en service par une opération de fermeture exécutée à l'extérieur de la zone à risque (15) tant que le moyen de fermeture se trouve encore dans un commutateur (22) situé à l'intérieur de la zone à risque (15).

7. Procédé selon l'une des revendications précédentes, **caractérisé en ce qu'**un signal est formé lorsque les opérations successives de fermeture ne sont pas exécutées à l'intérieur du laps de temps prévu.

8. Procédé selon la revendication 7, **caractérisé en ce qu'**après le signal, un moyen d'actionnement, de préférence un clavier de confirmation (24), doit être actionné dans la zone à risque (15) avant que le dispositif puisse être remis en service.

9. Dispositif de protection d'une personne située dans une zone à risque, le dispositif présentant
une séparation (16) de la zone à risque qui présente au moins un accès et un commutateur (21) disposé à l'extérieur de la séparation (16) et apte à être actionné par un moyen de fermeture,
au moins un autre commutateur (22) apte à être actionné par le moyen de fermeture étant disposé à l'intérieur de la séparation (16),
**caractérisé par**
un dispositif de signalisation (23) qui forme un signal si après l'actionnement du commutateur (21) situé à l'extérieur de la séparation (16), le commutateur (22) situé à l'intérieur de la séparation (16) n'a pas été actionné à l'intérieur d'un laps de temps défini, ce qui garantit que la personne qui se déplace dans la zone à risque emporte le moyen de fermeture avec elle.

10. Dispositif selon la revendication 9, **caractérisé par** un organe de temporisation qui peut être activé lors de l'actionnement du commutateur (21) situé à l'extérieur de la fermeture (16) et qui peut être désactivé lors de l'actionnement du commutateur (22) situé à l'intérieur de la séparation (16), en particulier lorsque le ou les accès à la partie séparée ont été fermés et/ou verrouillés.

11. Dispositif selon la revendication 10, **caractérisé en ce qu'**un intervalle de temps prédéterminé par l'organe de temporisation définit la durée au cours de laquelle le commutateur (22) situé à l'intérieur de la séparation doit être actionné.

12. Dispositif selon la revendication 9, **caractérisé en ce qu'**au moins un moyen d'actionnement et de préférence un clavier de confirmation (24) est prévu pour interrompre le signal produit par le dispositif de signalisation (23) et pour réinitialiser l'intervalle de temps prédéterminé par l'organe de temporisation.

13. Dispositif selon l'une des revendications précédentes, **caractérisé en ce que** la séparation (16) est configurée en forme de clôture et/ou de paroi et présente au moins une porte (20) ou similaires, en particulier verrouillable, qui permet d'accéder à la zone à risque, un commutateur (21) situé à l'extérieur de la séparation (16) étant disposé au niveau d'une porte (20) ou similaires, de préférence dans ou sur un pupitre de service (25) situé à l'extérieur de la fermeture (16).

14. Dispositif selon l'une des revendications précédentes, **caractérisé en ce que** la séparation (16) s'effectue optiquement ou tactilement, l'accès pouvant être libéré après actionnement du commutateur (21) situé à l'extérieur de la séparation (16).

15. Dispositif selon l'une des revendications précédentes, **caractérisé en ce que** chaque commutateur (21, 22) est configuré comme commutateur à clé, le moyen de fermeture étant un commutateur, une carte à code et/ou un passe et un seul et même moyen de fermeture pouvant actionner les commutateurs (21, 22) situés respectivement à l'extérieur et à l'intérieur de la séparation (16).
